# EUROPEAN PATENT SPECIFICATION

(11) **EP 1 985 531 B1**
(45) Date of publication and mention of the grant of the patent: **22.09.2010**
(21) Application number: 07106856.3
(22) Date of filing: 24.04.2007
(51) Int. Cl.: B62K 25/30, F16F 1/373, F16F 1/44, B62K 3/02

(54) **Bicycle frame**
Fahrradrahmen
Cadre de bicyclette

(43) Date of publication of application: 29.10.2008
(73) Proprietor: MERIDA INDUSTRY CO., LTD., Meikang Village, Tatsun Hsiang, Changhua Hsien (TW)
(72) Inventor: Tseng, Ting-Huang, Tatsun Hsiang, Changhua Hsien (TW)
(74) Representative: Becker Kurig Straus

(56) References cited:
- DE-U1- 20 100 404
- DE-U1-202004 015 366
- FR-A- 379 488
- US-A- 564 319
- US-A- 4 421 337
- US-A1- 2004 145 148
- US-B1- 6 406 048

## Description

### 1. Field of the Invention

The present invention relates to a frame, and more particularly to a frame for a bicycle and that can reduce the weight of the bicycle and has a shock absorber to provide a smooth operation.

### 2. Description of Related Art

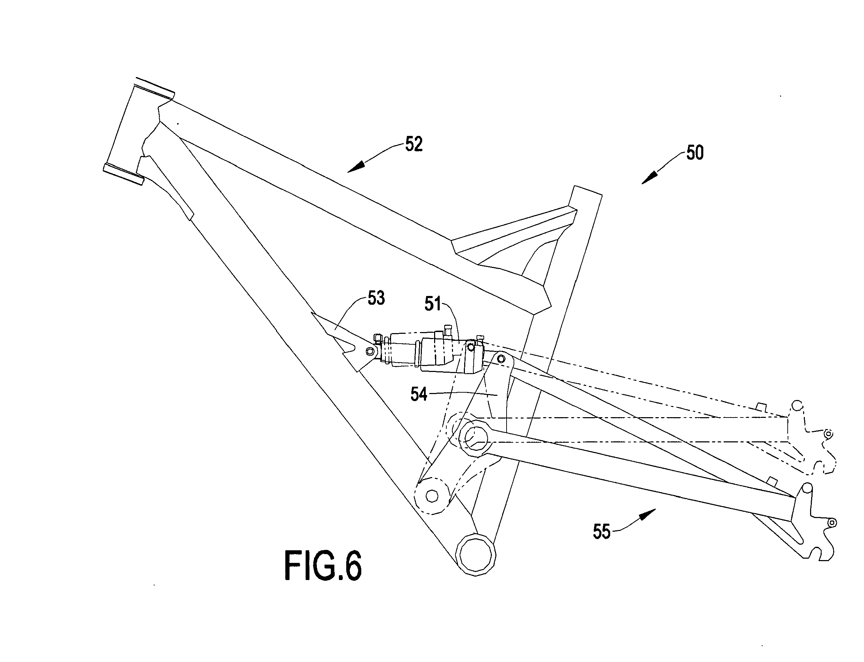

With reference to Figs. 6, a conventional bicycle frame (50) with a shock absorbing capability has a front frame (52), a rear frame (55) and a shock absorber (51). The front frame (52) has a mounting bracket (53) and a driving bracket (54). The mounting bracket (53) is attached securely to the front frame (52). The driving bracket (54) is attached pivotally to the front frame (52) and has a lower end, a middle and an upper end. The lower end of the driving bracket (54) is attached pivotally to the front frame (52). The rear frame (55) is connected pivotally to the middle and the upper end of the driving bracket (54) and move ups and pivots the driving bracket (54) when a shock is transmitted to the rear frame (55). The shock absorber (51) is mounted pivotally between the mounting bracket (53) and the upper end of the driving bracket (54) and absorbs the shock transmitted to the driving bracket (54) from the rear frame (55).

A bicycle frame according to the preamble is known from US 4,421,337, which discloses a bicycle frame provided with toggle links associated with its front and/or rear wheel which allow large and abrupt vertical movement of the wheel associated therewith while allowing the frame and bicycle rider to remain comparatively free of such movements.

Another bicycle frame of similar type is known from FR 379488, which describes a bicycle, provided with a rear suspension system, allowing the rear wheel of the bicycle to make a circular movement around the axis of the pedal of the bicycle.

Still another known bicycle frame is disclosed in US 2004/0145148. US 2004/0145148 describes a rear suspension road bicycle frame provided with an integrated rear shock absorbing assembly, having an elastomer shock absorbing spring member with a slide affixed to the brake bridge of the frame, and a sliding bearing in the upper wishbone so that the preloaded spring member absorbs shock and the frame absorbs flexing tending to unload the spring member.

However, the conventional bicycle frame (50) has the following shortcomings.
1. The conventional bicycle frame (50) can provide a shock absorbing capability, but the weight of the mounting bracket (53), the driving bracket (54) and the shock absorber (51) and the cost of manufacturing the conventional bicycle frame (50) will increase.
2. The shock absorber (51) is mounted exposed between the mounting bracket (53) and the driving bracket (54) of the conventional bicycle frame (50), and this may cause the shock absorber (51) weaken and influence the appearance of the conventional bicycle frame (50).

To overcome the shortcomings, the present invention provides a bicycle frame to mitigate or obviate the aforementioned problems.

The main objective of the present invention is to provide a bicycle frame that the weight of the bicycle frame is reduced and has a shock absorber to provide a smooth operation.

The bicycle frame in accordance with the present invention has a front frame, a rear frame and a shock absorber. The front frame has a head tube, a down tube, a top tube, a bottom bracket shell and a seat tube. The seat tube is connected to and protrudes up from the bottom bracket shell, is connected to the top tube and has a jacket and a threaded hole. The jacket is connected to the shock absorber and has an opening and a chamber. The rear frame is connected to the front frame and has a lower fork, two dropouts and an upper fork. The upper fork is connected to the dropouts and the shock absorber and has two bottom ends, a top end and two fasteners. The shock absorber is mounted between the seat tube and the upper fork and has a sleeve, an elastomer, a connecting pipe and a shaft.

Other objectives, advantages and novel features of the invention will become more apparent from the following detailed description when taken in conjunction with the accompanying drawings.

### IN THE DRAWINGS:

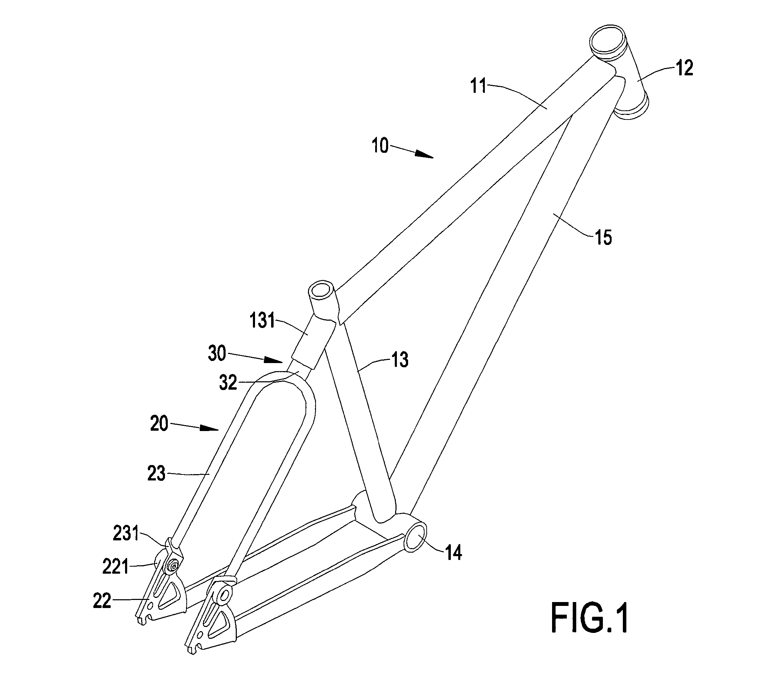

Fig. 1 is a perspective view of a bicycle frame in accordance with the present invention;
Fig. 2 is an enlarged exploded perspective view of an upper fork and a dropout on the bicycle frame in Fig. 1;
Fig. 3 is a side view in partial section of the bicycle frame in Fig. 2;
Fig. 4 is an enlarged exploded perspective view in partial section of an upper fork and a shock absorber in Fig.1;
Fig. 5 is a side view in partial section of the bicycle frame in Fig. 4; and
Fig. 6 is an operational side view of a conventional bicycle frame in accordance with the prior art.
   With reference to Figs. 1, 2 and 4, a bicycle frame in accordance with the present invention comprises a front frame (10), a rear frame (20) and a shock absorber (30).

The front frame (10) has a front, a rear, a head tube (12), a down tube (15), a top tube (11), a bottom bracket shell (14) and a seat tube (13).

The head tube (12) is formed at the front of the front frame (10).

The down tube (15) is connected to and protrudes at an angle down from the head tube (12) toward the rear end of the front frame (10) and has a bottom end.

The top tube (11) is substantially horizontal, is connected to and protrudes substantially horizontally from the head tube (12) toward the rear end of the front frame (10) and has a rear end.

The bottom bracket shell (14) is connected transversally to the bottom end of the down tube (15) and has a top.

The seat tube (13) is connected to and protrudes up from the top of the bottom bracket shell (14), is connected to the rear end of the top tube (11) and has an external surface, an upper end, a lower end, a jacket (131) and a threaded hole (134). The jacket (131) is formed on and protrudes down from the external surface of the seat tube (13) near the upper end opposite to the top tube (11), is connected to the shock absorber (30) and has a mounting end, a connecting end, an opening (132) and a chamber (133). The mounting end of the jacket (131) is formed on the external surface of the seat tube (13).

The opening (132) is defined in the connecting end of the seat tube (13) opposite to the mounting end. The chamber (133) is defined in the jacket (131) and is communicated with the opening (132). The threaded hole (134) is formed axially through the mounting end of the jacket (131) and is communicated with the chamber (133) and the seat tube (13).

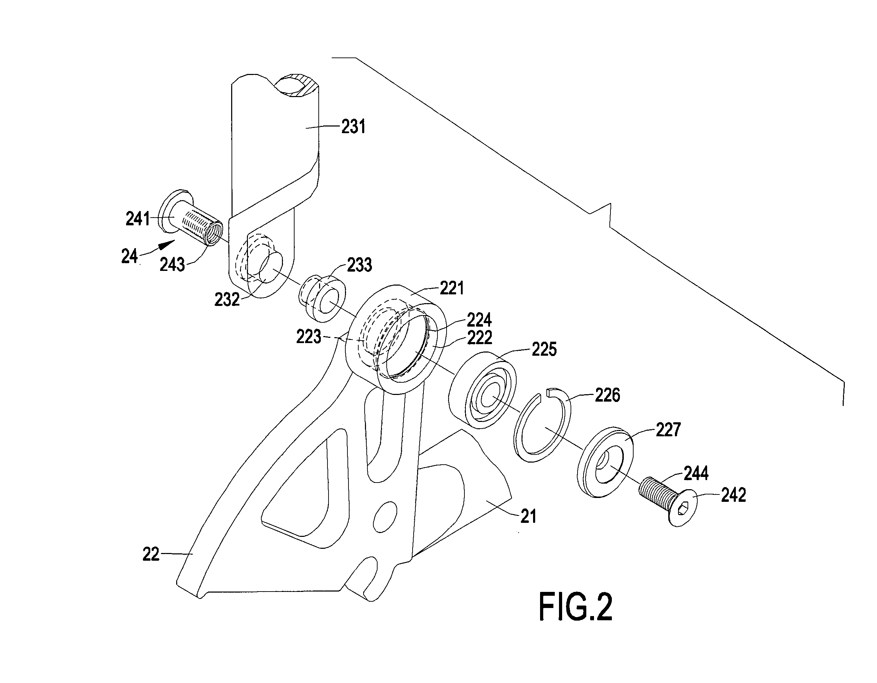

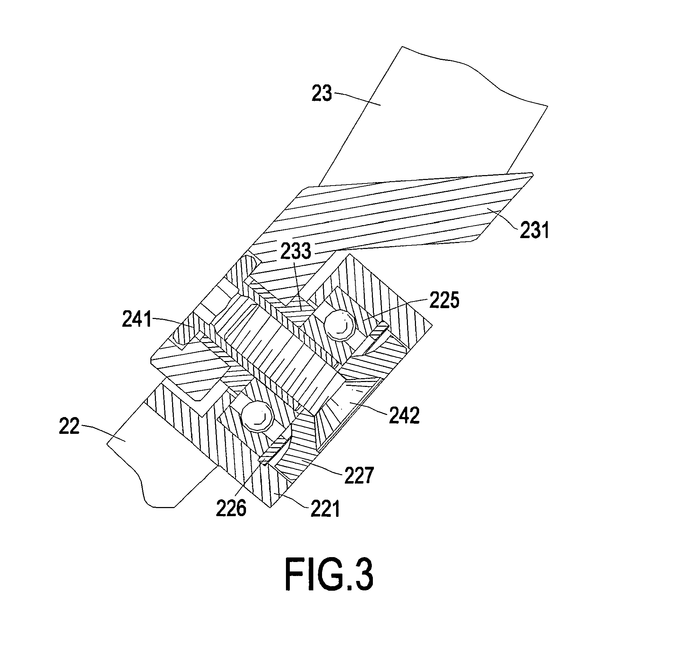

With reference to Figs. 2 and 3, the rear frame (20) is connected pivotally to the front frame (10) and has a lower fork (21), two dropouts (22) and an upper fork (23).

The lower fork (21) is connected pivotally to the bottom bracket shell (14) below the seat tube (13) and has a front end and two rear ends. The front end of the lower fork (21) is connected to the bottom bracket shell (14). The rear ends of the lower fork (21) are formed with the front end and parallel to each other.

The dropouts (22) are respectively mounted to the rear ends of the lower fork (21), and each dropout (22) has a top, a mounting sheath (221), a bearing (225), a C-ring (226) and a cover (227). The mounting sheath (221) is hollow, is mounted transversely on the top of the dropout (22) and has a closed end, an inner surface, a through hole (223), an open end (222) and an annular groove (224). The closed end of the mounting sheath (221) is attached to the top of the dropout (22). The through hole (223) is formed axially through the closed end of the mounting sheath (221). The open end (222) is communicated with the through hole (223). The annular groove (224) is formed in the inner surface of the mounting sheath (221) near the open end (222). The bearing (225) is mounted in the mounting sheath (221) from the open end (222). The C-ring (226) is mounted in the annular groove (224) to hold the bearing (225) inside the mounting sheath (221). The cover (227) is attached to the mounting sheath (221) to close the open end (222).

With reference to Figs. 2 to 4, the upper fork (23) is connected to the dropouts (22) and the shock absorber (30) and has two bottom ends (231), a top end and two fasteners (24). The bottom ends (231) of the fork upper (23) are respectively connected to the closed ends of the mounting sheaths (221) of the dropouts (22) and each bottom end (231) has a mounting hole (232) and a mounting sleeve (233). The mounting hole (232) is formed through the bottom end (231) and is aligned with the through hole (223) in a corresponding mounting sheath (221). The mounting sleeve (233) is connected to the mounting hole (232), extends into the through hole (223) of the corresponding mounting sheath (221) and abuts with the bearing (225). The top end is connected to the shock absorber (30). The fasteners (24) are connected to the bottom ends (231) and the dropouts (22), and each fastener (24) has an inserting tube (241) and a bolt (242). The inserting tube (241) extends through the mounting hole (232) in the bottom end (231), the mounting sleeve (233) and the bearing (225) and has an inner thread (243). The bolt (242) extends through the cover (227), the C-ring (226) and the bearing (225) and is screwed into the inserting tube (241) to connect the mounting sheath (221) with the bottom end (231) of the upper fork (23) and has an outer thread (244). The outer thread (244) of the bolt (242) is screwed with the inner thread (243) of the inserting tube (241).

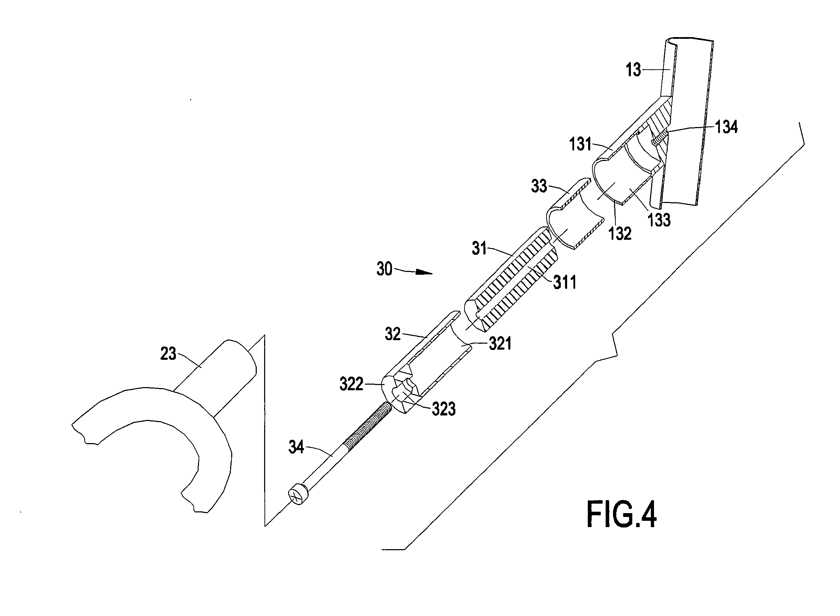

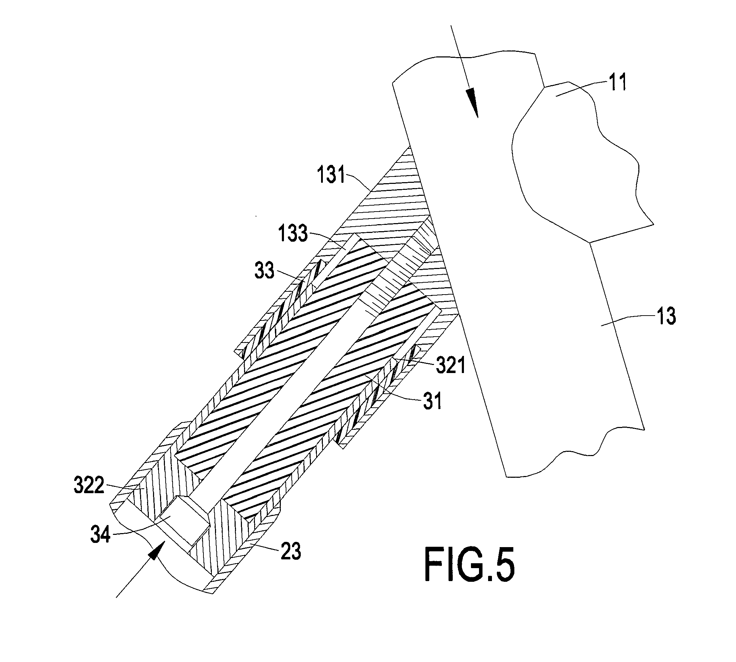

With further reference to Figs. 4 and 5, the shock absorber (30) is mounted between the seat tube (13) of the front frame (10) and the upper fork (23) of the rear frame (20), absorbs shock applied to the rear frame (20) and has a sleeve (33), an elastomer (31), a connecting pipe (32) and a shaft (34). The sleeve (33) is tubular and is mounted in the chamber (133) of the jacket (131) through the opening (132). The elastomer (31) is extended into the chamber (133) of the jacket (131) and has a center and a central hole (311). The central hole (311) is formed axially through the center of the elastomer (31) and is communicated with the threaded hole (134). The connecting pipe (32) is mounted around the elastomer (31) and has an open end (321), a mounting end (322) and a connecting hole (323). The open end (321) of the connecting pipe (32) extends into the sleeve (33) and the chamber (133) in the jacket (131) and is mounted around the elastomer (31). The mounting end (322) is connected securely to the top end of the upper fork (23). The connecting hole (323) is formed through the mounting end (322) of the connecting pipe (32) and is aligned with the central hole (311) of the elastomer (31). The shaft (34) extends through the connecting hole (323) of the connecting pipe (32) and the central hole (311) of the elastomer (31) and is screwed into the threaded hole (134) in the seat tube (13). With the shaft (34), the connecting pipe (32), the sleeve (33) and the elastomer (31) are connected to the jacket (131) of the seat tube (13). With the shock absorber (30) mounted between the upper fork (23) and the jacket (131) of the seat tube (13), a shock applied to the rear frame (20) causes the rear frame (20) to move up and compress the shock absorber (30) to absorb the shock.

The bicycle frame as described has the following advantages.
1. The bicycle frame can provide a shock absorbing capability with the shock absorber (30) to absorb the shock transmitted from the rear frame (20).
2. The shock absorber (30) is mounted inside the jacket (131) of the seat tube (13) and the upper fork (23), and this may prevent the shock absorber (30) weaken and improve the appearance of the bicycle frame.
3. The weights of the elastomer (31), the connecting pipe (32), the sleeve (33) and the shaft (34) are less than the weights the mounting bracket (53) and the driving bracket (54) on a conventional frame as shown in Fig. 6, and this can reduce the weight of and the cost for manufacturing the bicycle frame.

Even though numerous characteristics and advantages of the present invention have been set forth in the foregoing description, together with details of the structure and features of the invention, the disclosure is illustrative only.

## Claims

1. A frame for a bicycle having a front frame with a front, a rear, a head tube formed at the front of the front frame (10), a down tube (15) connected to and protruding at an angle down from the head tube (12) toward the rear of the front frame with a bottom end, a top tube (11) connected to and protruding from the head tube (12) toward the rear of the front frame (10) with a rear end, a bottom bracket shell (14) connected transversally to the bottom end of the down tube (15) with a top and a seat tube (13) connected to and protruding up from the top of the bottom bracket shell (14) and connected to the rear end of the top tube (11) with an external surface, an upper end, a lower end and a jacket formed on and protruding down from the external surface of the seat tube neat the upper end opposite to the top tube (11) with a mounting end formed on the external surface of the seat tube (13), a connecting end, an opening (132) defined in the connecting end of the seat tube (13) opposite to the mounting end and a chamber (133) defined in the jacket (131) and communicating with the opening (132), a rear frame (20) connected pivotally to the front frame (10) with a lower fork (21) connected pivotally to the bottom bracket shell (14) below the seat tube (13) with a front end connected to the bottom bracket shell (14) and two rear ends formed with the front end and parallel to each other, two dropouts (22) respectively mounted on the rear ends of the lower fork (21) and an upper fork (23) connected to the dropouts (22) and a shock absorber (30) mounted between the seat tube (13) of the front frame (10) and the upper fork (23) of the rear frame (20), **characterized in that**
the seat tube (13) has a threaded hole (134) formed axially through the mounting end of the jacket (131) and communicating with the chamber (133); and
the shock absorber (30) has
an elastomer (31) extending into the chamber (133) of the jacket (131) and has
a center; and
a central hole (311) formed axially through the center of the elastomer (31) and communicating with the threaded hole (134);
a connecting pipe (32) mounted around the elastomer (31) and having
an open end (321) extending into a sleeve (33) mounted in the chamber (133), and into the chamber (133) in the jacket (131) and mounted around the elastomer (31);
a mounting end (322) connected securely to the upper fork (23); and
a connecting hole (323) formed through the mounting end (322) of the connecting pipe (32) and aligned with the central hole (311) of the elastomer (31); and
a shaft (34) extending through the connecting hole (323) of the connecting pipe (32) and the central hole (311) of the elastomer (31) and screwed into the threaded hole (134) of the seat tube (13).

2. The bicycle frame as claimed in claim 1, wherein each dropout (22) has a top;
a mounting sheath (221) being hollow, being mounted transversely on the top of the dropout (22) and having
a closed end being attached to the top of the dropout (22);
an inner surface;
a through hole (223) being formed axially through the closed end of the mounting sheath (221);
an open end (222) being communicated with the through hole (223);
and
an annular groove (224) being formed in the inner surface of the mounting sheath (221) near the open end (222);
a bearing (225) being mounted in the mounting sheath (221);
a C-ring (226) being mounted in the annular groove (224) to hold the bearing (225) inside the mounting sheath (221); and
a cover (227) being attached to the mounting sheath (221) to close the open end (222).

3. The bicycle frame as claimed in claim 2, wherein the upper fork (23) has
two bottom ends (231) being respectively connected to the closed ends of the mounting sheaths (221) of the dropouts (22) and each bottom end (231) having
a mounting hole (232) being formed through the bottom end (231) and being aligned with the through hole (223) of a corresponding mounting sheath (221); and
a mounting sleeve (233) being connected to the mounting hole (232), extending into the through hole (223) of the corresponding mounting sheath (221) and abutting with the bearing (225);
a top end being connected to the shock absorber (30); and
two fasteners (24) being connected to the bottom ends (231) and the dropouts (22).

4. The bicycle frame as claimed in claim 3, wherein each fastener (24) has
an inserting tube (241) extending through the mounting hole (232) in the bottom end (231), the mounting sleeve (233) and the through hole (223) of the mounting sheath (221) and having an inner thread (243); and
a screwed bolt (242) extending through the cover (227), the C-ring (226) and the bearing (225) and being screwed into the inserting tube (241) to connect the mounting sheath (221) with the bottom end (231) of the upper fork (23) and having an outer thread (244) screwed with the inner thread (243) of the inserting tube (241).

5. The bicycle frame as claimed in claim 4, wherein the shock absorber (30) has a sleeve (33) being tubular, being mounted in the chamber (133) of the jacket (131) from the opening (132) and the connecting pipe (32) extends into the sleeve (33).

6. The bicycle frame as claimed in claim 1, wherein the shock absorber (30) has a sleeve (33) being tubular, being mounted in the chamber (133) of the jacket (131) from the opening (132) and the connecting pipe (32) extends into the sleeve (33).

## Patentansprüche

1. Rahmen für ein Fahrrad, aufweisend:
mit einem Vorderrahmen mit:
einer Vorderseite,
einer Rückseite,
einem Steuerrohr, das an der Vorderseite des Vorderrahmens (10) gebildet ist,
ein Unterrohr (15), das mit dem Steuerrohr (12) verbunden ist und davon in einem Winkel von dem Steuerrohr (12) abwärts zur Rückseite des Vorderrahmens mit einem Bodenende hervorsteht,
einem Oberrohr (11), das mit dem Steuerrohr (12) verbunden ist und mit einem rückwärtigem Ende zur Rückseite des Vorderrahmens hervorsteht,
einem Tretlagergehäuse (14), das mit einer Oberseite quer mit dem Bodenende des Unterrohrs (15) verbunden ist, und einem Sitzrohr (13), das mit der Oberseite des Tretlagergehäuses (14) verbunden ist und davon hervorsteht, und mit dem rückwärtigen Ende des Oberrohrs (11) mit einer externen Oberfläche,
einem oberen Ende, einem unteren Ende und einer Hülse verbunden ist, die an der externen Oberfläche des Sitzrohrs (13) gebildet ist und davon nach unten bei dem oberen Ende gegenüber dem Oberrohr (11) hervorsteht, mit einem Montageende, das an der externen Oberfläche des Sitzrohrs (13) gebildet ist,
einem Verbindungsende, einer Öffnung (132), die in dem Verbindungsende des Sitzrohrs (13) gegenüber dem Montageende und einer Kammer (133) definiert ist, die in der Hülse (131) definiert ist und mit der Öffnung (132) in Verbindung steht;
einen Hinterrahmen (20), der mit einer unteren Gabel (21) schwenkbar mit dem Vorderrahmen (10) verbunden ist, die beweglich mit dem Tretlagergehäuse (14) unterhalb dem Sitzrohr (13) verbunden ist, wobei ein vorderes Ende mit dem Tretlagergehäuse (14) verbunden ist, und wobei zwei rückwärtige Enden mit dem vorderen Ende und zueinander parallel gebildet sind,
zwei Ausfallenden (22), die entsprechend an den rückwärtigen Enden der unteren Gabel (21) montiert sind, und
eine obere Gabel (23), die mit den Ausfallenden (22) verbunden ist und einem Stoßdämpfer (30), der zwischen dem Sitzrohr (13) des Vorderrahmens (10) und
der oberen Gabel (23) des Hinterrahmens (20) montiert ist,
**dadurch gekennzeichnet, dass**
das Sitzrohr (13) ein Gewindeloch (134) aufweist, das axial durch das Montageende der Hülse (131) gebildet ist und mit der Kammer (133) in Verbindung steht; und
der Stoßdämpfer (31) ein Elastomer (31) aufweist, das sich in die Kammer (133) der Hülse (131) erstreckt und aufweist:
eine Mitte; und
ein Mittenloch (311), das axial durch die Mitte des Elastomers (31) gebildet ist und mit dem Gewindeloch (134) in Verbindung steht;
ein Verbindungsrohr (32), das um das Elastomer (31) herum montiert ist und ein offenes Ende (321) aufweist, welches sich in eine Hülle (33), die in der Kammer (133) montiert ist, und in die Kammer (133) in die Hülse (131) erstreckt, und um das Elastomer (31) herum montiert ist;
ein Montageende (322), welches fest mit der oberen Gabel (23) verbunden ist; und
ein Verbindungsloch (323), das durch das Montageende (322) des Verbindungsrohres (32) gebildet ist und bezüglich des Mittenlochs (311) des Elastomers (31) ausgerichtet ist; und
ein Schaft (34), der sich durch das Verbindungsloch (323) des Verbindungsrohrs (32) und das Mittenloch (311) des Elastomers (31) erstreckt und in das Gewindeloch (134) des Sitzrohrs (13) geschraubt ist.

2. Fahrradrahmen gemäß Anspruch 1, wobei jedes Ausfallende (22) aufweist:
eine Oberseite;
einen Montagemantel (221), der hohl ist, der quer auf der Oberseite der Ausfallenden (22) montiert ist und aufweist:
ein geschlossenes Ende, welches an der Oberseite der Ausfallenden (22) angebracht ist;
eine innere Oberfläche;
ein Durchgangsloch (223), welches axial durch das geschlossene Ende des Montagemantels (221) gebildet ist;
ein offenes Ende (222), welches mit dem Durchgangsloch (223) in Verbindung steht; und
eine ringförmige Vertiefung (224), die in der inneren Oberfläche des
Montagemantels (221) bei dem offenen Ende (222) gebildet ist;
ein Lager (225), welches in dem Montagemantel (221) montiert ist;
einen C-Ring (226), der in der ringförmigen Vertiefung (224) montiert ist, um das Lager (225) in dem Montagemantel (221) zu halten; und
eine Abdeckung (227), die an dem Montagemantel (221) angebracht ist, um das offene Ende (222) zu verschließen.

3. Fahrradrahmen gemäß Anspruch 2, wobei die obere Gabel (23) zwei Bodenenden (231) aufweist, die entsprechend mit den geschlossenen Enden der Montagemäntel (221) der Ausfallenden (22) und jedem Bodenende (231) verbunden sind, aufweisend:
ein Montageloch (232), das durch das Bodenende (231) gebildet ist, und
bezüglich des Durchgangsloch (223) eines dazugehörigen Montagemantels (221) ausgerichtet ist; und
eine Montagehülle (233), die mit dem Montageloch (232) verbunden ist, sich in das Durchgangsloch (223) des entsprechenden Montagemantels (221) erstreckt und an dem Lager (225) anliegt;
ein oberes Ende, das mit dem Stoßdämpfer (30) verbunden ist; und
zwei Befestigungselement (24), die mit den Bodenenden (231) und den Ausfallenden (22) verbunden sind.

4. Fahrradrahmen gemäß Anspruch 3, wobei jedes Befestigungselement (24) aufweist;
ein Einführrohr (241), das sich durch das Montageloch (232) in dem unteren Ende (231), die Montagehülle (233) und das Durchgangsloch (223) des Montagemantels (221) erstreckt und ein Innengewinde (243) aufweist; und
einen Schraubbolzen (242), der sich durch die Abdeckung (227), den C-Ring (226) und das Lager (225) erstreckt und in das Einführrohr (241) eingeschraubt ist, um den Montagemantel (221) mit dem Bodenende (231) der oberen Gabel (23) zu verbinden, und ein Außengewinde (244) aufweist, das mit dem Innengewinde (243) des Einführrohrs (241) verschraubt ist.

5. Fahrradrahmen gemäß Anspruch 4, wobei der Stoßdämpfer (30) einen Mantel (33) aufweist, der rohrförmig ist, der in der Kammer (133) der Hülse (131) von der Öffnung (132) montiert ist und wobei sich das Verbindungsrohr (32) in den Mantel (33) erstreckt.

6. Fahrradrahmen gemäß Anspruch 1, wobei der Stoßdämpfer (30) einen Mantel (33) aufweist, der rohrförmig ist, der in der Kammer (133) der Hülse (131) von der Öffnung (132) montiert ist und wobei sich das Verbindungsrohr (32) in den Mantel (33) erstreckt.

## Revendications

1. Cadre de bicyclette comportant un cadre avant avec un avant, un arrière, un tube de direction formé à l'avant du cadre avant (10), un tube diagonal (15) raccordé à et dépassant en formant un angle vers le bas à partir du tube de direction (12) vers l'arrière du cadre avant par une extrémité de fond, un tube horizontal (11) raccordé à et dépassant du tube de direction (12) vers l'arrière du cadre avant (10) par une extrémité arrière, une boîte de pédalier (14) raccordée transversalement à l'extrémité de fond du tube diagonal (15) par un sommet et une tige de selle (13) raccordée à et dépassant vers le haut à partir du sommet de la boîte de pédalier (14) et raccordé à l'extrémité arrière du tube horizontal (11) par une surface externe, une extrémité supérieure, une extrémité inférieure et une chemise formée sur et dépassant vers le bas à partir de la surface externe de la tige de selle près de l'extrémité supérieure opposée au tube horizontal (11) par une extrémité de montage formée sur la surface externe de la tige de selle (13), une extrémité de raccordement, une ouverture (132) définie dans l'extrémité de raccordement de la tige de selle (13) opposée à l'extrémité de montage et une chambre (133) définie dans la chemise (131) et communiquant avec l'ouverture (132), un cadre arrière (20) raccordé de manière pivotante au cadre avant (10) par une fourche inférieure (21) raccordée de manière pivotante à la boîte de pédalier (14) en dessous de la tige de selle (13) par une extrémité avant raccordée à la boîte de pédalier (14) en dessous de la tige de selle (13) par une extrémité avant raccordée à la boîte de pédalier (14) et deux extrémités arrières formées avec l'extrémité avant et parallèles l'une à l'autre, deux pattes arrières (22) respectivement montées sur les extrémités arrières de la fourche inférieure (21) et une fourche supérieure (23) raccordée aux pattes arrières (22) et un absorbeur de chocs (30) monté entre la tige de selle (13) du cadre avant (10) et la fourche supérieure (23) du cadre arrière (20), **caractérisé en ce que**
la tige de selle (13) comporte un trou fileté (134) formé axialement à travers l'extrémité de montage de la chemise (131) et communiquant avec la chambre (133) ; et
l'absorbeur de chocs (30) comporte
un élastomère (31) s'étendant dans la chambre (133) de la chemise (131) et comporte
un centre ; et
un trou central (311) formé axialement à travers le centre de l'élastomère (31) et communiquant avec le trou fileté (134) ;
un tube de raccordement (32) monté autour de l'élastomère (31) et comportant
une extrémité ouverte (321) s'étendant dans un manchon (33) monté dans la chambre (133) et dans le chambre (133) dans la chemise (131) et monté autour de l'élastomère (31) ;
une extrémité de montage (322) raccordée de manière sécurisée à la fourche supérieure (23) ; et
un trou de raccordement (323) formé à travers l'extrémité de montage (322) du tube de raccordement (32) et aligné avec le trou central (311) de l'élastomère (31) ; et
un arbre (34) s'étendant à travers le trou de raccordement (323) du tube de raccordement (32) et le trou central (311) de l'élastomère (31) et vissé dans le trou fileté (134) de la tige de selle (13).

2. Cadre de bicyclette selon la revendication 1, dans lequel chaque patte arrière (22) comporte un sommet ;
une gaine de montage (221) étant creuse, étant montée transversalement sur le sommet de la patte arrière (22) et comportant
une extrémité fermée étant fixée au sommet de la patte arrière (22) ;
une surface intérieure ;
un trou traversant (223) étant formé axialement à travers l'extrémité fermée de la gaine de montage (221) ;
une extrémité ouverte (22) étant communicante avec le trou traversant (223) ; et
une cavité annulaire (224) étant formée dans la surface intérieure de la gaine de montage (221) près de l'extrémité ouverte (222) ;
un palier (225) étant monté dans la gaine de montage (221) ;
un anneau de retenue en forme de croissant (226) étant monté dans la cavité annulaire (224) afin de maintenir le palier (225) à l'intérieur de la gaine de montage (221) ; et
un couvercle (227) étant fixé à la gaine de montage (221) afin de fermer l'extrémité ouverte (222).

3. Cadre de bicyclette selon la revendication 2, dans lequel la fourche supérieure (23) comporte deux extrémités de fond (231) étant respectivement raccordées aux extrémités fermées des gaines de montage (221) des pattes arrières (22) et chaque extrémité de fond (231) comportant
un trou de montage (232) étant formé à travers l'extrémité de fond (231) et étant aligné avec le trou traversant (223) d'une gaine de montage correspondante (221) ; et
un manchon de montage (233) étant raccordé au trou de montage (232) s'étendant à l'intérieur du trou traversant (223) de la gaine de montage correspondante (221 et butant sur le palier (225) ;
une extrémité de sommet étant raccordée à l'absorbeur de chocs (30) ; et
deux fixations (24) étant raccordées aux extrémités de fond (231) et aux pattes arrières (22).

4. Cadre de bicyclette selon la revendication 3, dans lequel chaque fixation (24) comporte
un tube d'insertion (241) s'étendant à travers le trou de montage (232) dans l'extrémité de fond (231), le manchon de montage (233) et l'alésage traversant (223) de la gaine de montage (221) et comportant un filetage intérieur (243) ; et
un boulon fileté (242) s'étendant à travers le couvercle (227), l'anneau de retenue en forme de croissant (226) et le palier (225) et étant vissé dans le tube d'insertion (241) afin de raccorder la gaine de montage (221) à l'extrémité de fond (231) de la fourche supérieure (23) et comportant un filetage extérieur (244) vissé avec le filetage intérieur (243) du tube d'insertion (241).

5. Cadre de bicyclette selon la revendication 4, dans lequel l'absorbeur de chocs (30) comporte un manchon (33) étant tubulaire, étant monté dans la chambre (133) de la chemise (131) à partir de l'ouverture (132) et le tube de raccordement (32) s'étend à l'intérieur du manchon (33).

6. Cadre de bicyclette selon la revendication 1, dans lequel l'absorbeur de chocs (30) comporte un manchon (33) étant tubulaire, étant monté dans la chambre (133) de la chemise (131) à partir de l'ouverture (132) et le tube de raccordement (32) s'étend à l'intérieur du manchon (33).
